# EUROPÄISCHE PATENTSCHRIFT

(11) **EP 2 027 166 B1**
(45) Veröffentlichungstag und Bekanntmachung des Hinweises auf die Patenterteilung: **28.10.2009**
(21) Anmeldenummer: 07729178.9
(22) Anmeldetag: 16.05.2007
(51) Int. Cl.: C08F 210/02, C08F 2/00, C08F 4/34

(54) **VERFAHREN ZUR HERSTELLUNG VON ETHYLENCOPOLYMEREN**
METHOD FOR PRODUCING ETHYLENE COPOLYMERS
PROCÉDÉ DE PRODUCTION DE COPOLYMÈRES D'ÉTHYLÈNE

(30) Priorität: 23.05.2006 EP 06114396
(43) Veröffentlichungstag der Anmeldung: 25.02.2009
(73) Patentinhaber: BASF SE, 67056 Ludwigshafen (DE)
(72) Erfinder: MÄHLING, Frank-Olaf, 68165 Mannheim (DE); KASEL, Wolfgang, 69226 Nussloch (DE); ZELINSKI, Thomas, 67271 Neuleiningen (DE)
(86) Internationale Anmeldenummer: PCT/EP2007/054730
(87) Internationale Veröffentlichungsnummer: WO 2007/135038

(56) Entgegenhaltungen:
- EP-A1- 0 017 230
- EP-A2- 0 315 010
- EP-A2- 0 341 499
- EP-A2- 0 374 666

## Beschreibung

Die vorliegende Erfindung betrifft ein Verfahren zur kontinuierlichen Herstellung von Ethylencopolymeren durch radikalische Copolymerisation von Ethylen und mindestens einem Comonomer in einer Kaskade aus mindestens zwei Reaktoren, dadurch gekennzeichnet, dass man hinter dem ersten Reaktor einen oder mehrere Initiatoren in die Reaktionsmischung dosiert.

Ethylencopolymere mit einem oder mehreren Comonomeren wie beispielsweise ethylenisch ungesättigte Carbonsäuren und Estern von ethylenisch ungesättigten Carbonsäuren, werden vorzugsweise kontinuierlich im sogenannten Hochdruckverfahren hergestellt. Dazu copolymerisiert man bei Drücken im Bereich von 500 bis 5000 bar unter Verwendung von einem oder mehreren Radikalstartern (Initiatoren). Als Reaktionsmedium dient Ethylen, das im Hochdruckverfahren in der Regel im überkritischen Zustand vorliegt. Man kann auch in Gegenwart von einem oder mehreren Molmassenreglern (Reglern) copolymerisieren. Als Produkte erhält man je nach Betriebsweise Ethylencopolymere mit höheren (Mₙ über 20.000 g/mol) oder niedrigeren (Mₙ maximal 20.000 g/mol) Molekulargewichten, die man für zahlreiche Produkte anwenden kann. Beispielhaft sei die Verwendung als Schlagzähmodifikator (Schlagzähmodifier, impact modifier) genannt.

In vielen Fällen beobachtet man jedoch, dass die Lagerung von Ethylencopolymeren nicht unproblematisch ist. Produkte mit einer tiefen Glastemperatur, beispielsweise unter -40°C neigen häufig bei hohen Außentemperaturen, beispielsweise im Sommer bei 30°C und mehr, zum Verkleben oder Verbacken.

Daher bestand die Aufgabe, ein Verfahren bereit zu stellen, durch das man Ethylencopolymere herstellen kann, die nicht zum Verkleben oder Verbacken neigen und dennoch als Schlagzähmodifikator geeignet sind.

Dementsprechend wurde das eingangs definierte Verfahren gefunden.

Die kontinuierliche Copolymerisation von Ethylen (a) und mindestens einem Comonomer kann man erfindungsgemäß in Form einer radikalisch initiierten Copolymerisation durchführen, bevorzugt unter Hochdruckbedingungen, beispielsweise in kontinuierlich betriebenen gerührten Hochdruckautoklaven, im Folgenden auch als Hochdruckautoklaven bezeichnet, oder in Hochdruckrohrreaktoren, im Folgenden auch als Rohrreaktoren bezeichnet.

Das erfindungsgemäße Verfahren führt man in einer Kaskade aus mindestens zwei Reaktoren durch. Geeignete Reaktoren sind beispielsweise Hochdruckautoklaven und Hochdruckrohrreaktoren, letztere werden im Folgenden auch als Rohrreaktoren bezeichnet. Die Herstellung in Kaskaden aus mindestens zwei Hochdruckautoklaven, aus mindestens zwei Rohrreaktoren oder aus Hochdruckautoklav und Rohrreaktor ist bevorzugt, besonders bevorzugt sind Kaskaden aus einem Hochdruckautoklav und einem Rohrreaktor.

Gerührte Hochdruckautoklaven sind an sich bekannt, eine Beschreibung findet man in Ullmann's Encyclopedia of Industrial Chemistry, 5. Auflage, Stichworte: Waxes, Bd. A 28, S. 146 ff., Verlag Chemie Weinheim, Basel, Cambridge, New York, Tokio, 1996. Bei ihnen verhält sich vorzugsweise das Verhältnis Länge/Durchmesser in Intervallen von 5:1 bis 30:1, bevorzugt 10:1 1 bis 20:1. Die gleichfalls anwendbaren Hochdruckrohrreaktoren findet man ebenfalls in Ullmann's Encyclopedia of Industrial Chemistry, 5. Auflage, Stichworte: Waxes, Bd. A 28, S. 146 ff., Verlag Chemie Weinheim, Basel, Cambridge, New York, Tokio, 1996.

In einer Ausführungsform der vorliegenden Erfindung führt man die Copolymerisation bei Drücken im Bereich von 500 bis 5000 bar durch, bevorzugt 1500 bis 2500 bar. Bedingungen dieser Art werden im Folgenden auch als Hochdruck bezeichnet.

In einer Ausführungsform der vorliegenden Erfindung führt man die Copolymerisation bei Reaktionstemperaturen im Bereich von 120 bis 300°C, bevorzugt im Bereich von 170 bis 280°C durch. Dabei muss die Reaktionstemperatur nicht an allen Stellen der eingesetzten Apparatur gleich sein. Insbesondere dann, wenn man einen Rohrreaktor oder eine Kaskade einsetzt, kann die Reaktionstemperatur über die Apparatur unterschiedliche Werte annehmen. Im letzteren Falle wird im Rahmen der vorliegenden Erfindung mit der Reaktionstemperatur die maximale Temperatur bezeichnet.

Das oder die Comonomere wählt man aus vinylischen Verbindungen, die sich mit Ethylen copolymerisieren lassen. Beispiele sind ethylenisch ungesättigte Carbonsäuren, insbesondere ethylenisch ungesättigte Mono- und Dicarbonsäuren und Derivate wie beispielsweise Ester von ethylenisch ungesättigten Carbonsäuren, weiterhin α-Olefine wie beispielsweise 1-Hexen, 1-Octen, 1-Decen, 1-Dodecen oder 1-Hexadecen, und Carbonsäurevinylester bzw. Vinylester von Carbonsäuren ohne ethylenische Doppelbindung wie beispielsweise Vinylacetat und Vinylpropionat. Weitere geeignete Comonomere sind beispielsweise Styrol, Vinylsilane, Vinylphosphonsäure und deren Mono- und Dialkylester, und Isobuten.

In einer bevorzugten Ausführungsform der vorliegenden Erfindung wählt man das oder die Comonomere aus ethylenisch ungesättigten Carbonsäuren, ethylenisch ungesättigten Dicarbonsäuren, Estern von ethylenisch ungesättigten Carbonsäuren und Vinylacetat.

In einer Ausführungsform der vorliegenden Erfindung copolymerisiert man zur Durchführung des erfindungsgemäßen Verfahrens miteinander
(a) 50 bis 95 Gew.-%, bevorzugt 55 bis 82 Gew.-%, besonders bevorzugt 75 bis 80 Gew.-% Ethylen,
(b) 0,1 bis 30 Gew.-%, bevorzugt 1 bis 15 Gew.-%, besonders bevorzugt bis 10 Gew.-% mindestens ein Comonomer, gewählt aus ethylenisch ungesättigten Carbonsäuren und ethylenisch ungesättigten Dicarbonsäuren, oder
(c) 0,5 bis 50 Gew.-%, bevorzugt 20 bis 40 Gew.-% mindestens ein Comonomer, gewählt aus Estern von ethylenisch ungesättigten Carbonsäuren, Vinylphosphonsäure und deren Alkylestern,
(d) gegebenenfalls ein oder mehrere weitere Comonomere, beispielsweise bis 20 Gew.-%, bevorzugt bis 5 Gew.-%.

Dabei beziehen sich Angaben in Gew.-% jeweils auf gesamtes erfindungsgemäß hergestelltes Ethylencopolymer.

Dabei kann der Gehalt an Comonomer (b) den Wert null annehmen, wenn mindestens 0,5 Gew.-% von mindestens einem unter (c) genannten Comonomeren einpolymerisiert sind. Umgekehrt kann der Gehalt an Comonomer (c) null sein, wenn mindestens 0,1 Gew.-% von mindestens einem unter (b) genannten Comonomeren einpolymerisiert sind.

In einer Ausführungsform der vorliegenden Erfindung wird als ethylenisch ungesättigte Carbonsäure mindestens eine Monocarbonsäure der allgemeinen Formel gewährt, 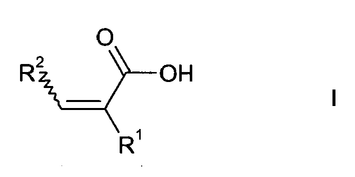 in der die Variablen wie folgt definiert sind:
- R¹ und R²: sind gleich oder verschieden,
- R¹: wird gewählt aus Wasserstoff und unverzweigtem und verzweigtem C₁-C₁₀-Alkyl, wie beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, iso-Octyl, 2-Ethylhexyl, n-Nonyl, n-Decyl; besonders bevorzugt C₁-C₄-Alkyl wie Methyl, Ethyl, n-Propyl, iso-Propyl, n-Butyl, iso-Butyl, sec.-Butyl und tert.-Butyl, insbesondere Methyl;
- R²: wird gewählt aus unverzweigten und verzweigten C₁-C₁₀-Alkyl wie beispielsweise Methyl, Ethyl, n-Propyl, iso-Propyl, n-Butyl, iso-Butyl, sec.-Butyl, tert.-Butyl, n-Pen- tyl, iso-Pentyl, sec.-Pentyl, neo-Pentyl, 1,2-Dimethylpropyl, iso-Amyl, n-Hexyl, iso- Hexyl, sec.-Hexyl, n-Heptyl, n-Octyl, iso-Octyl, 2-Ethylhexyl, n-Nonyl, n-Decyl; be- sonders bevorzugt C₁-C₄-Alkyl wie Methyl, Ethyl, n-Propyl, iso-Propyl, n-Butyl, iso- Butyl, sec.-Butyl und tert.-Butyl, insbesondere Methyl;
und ganz besonders bevorzugt Wasserstoff.

In einer Ausführungsform der vorliegenden Erfindung bedeutet R¹ Wasserstoff oder Methyl. Ganz besonders bevorzugt bedeutet R¹ Methyl.

In einer Ausführungsform der vorliegenden Erfindung bedeuten R¹ Wasserstoff oder Methyl und R² Wasserstoff.

Ganz besonders bevorzugt wird als ethylenisch ungesättigte Carbonsäure (b) der allgemeinen Formel **I** Acrylsäure oder Methacrylsäure eingesetzt.

Wünscht man mehrere ethylenisch ungesättigte Carbonsäuren (b) einzusetzen, so kann man zwei verschiedene ethylenisch ungesättigte Carbonsäuren der allgemeinen Formel I einsetzen wie beispielsweise Acrylsäure und Methacrylsäure.

Unter ethylenisch ungesättigten Dicarbonsäuren sind vorzugsweise ethylenisch ungesättigte C₄-C₁₀-Dicarbonsäuren zu verstehen, beispielsweise Maleinsäure, Fumarsäure, Citraconsäure, Metaconsäure und Itaconsäure, sowie die entsprechenden Anhydride, wenn sie in nicht-polymerer Form vorliegen, beispielsweise Itaconsäureanhydrid und insbesondere Maleinsäureanhydrid.

In einer speziellen Ausführungsform der vorliegenden Erfindung setzt man mindestens eine ethylenisch ungesättigte Monocarbonsäure beispielsweise der allgemeinen Formel I und mindestens eine ethylenisch ungesättigte C₄-C₁₀-Dicarbonsäure oder ihr Anhydrid ein, wenn es in nicht-polymerer Form vorliegt.

In einer besonderen Ausführungsform der vorliegenden Erfindung setzt man als ethylenisch ungesättigte Carbonsäure (Meth)acrylsäure und als ethylenisch ungesättigte C₄-C₁₀-Dicarbonsäure Maleinsäure oder Maleinsäureanhydrid ein.

In einer Ausführungsform der vorliegenden Erfindung setzt man zur Herstellung von Ethylencopolymer nur eine ethylenisch ungesättigte Carbonsäure (b) ein, bevorzugt Methacrylsäure und besonders bevorzugt Acrylsäure.

Geeignete Ester von ethylenisch ungesättigten Carbonsäuren sind Phenylester und Alkylester der vorstehend genannten ethylenisch ungesättigten Carbonsäuren der allgemeinen Formel I, insbesondere C₁-C₁₀-Alkylester der vorstehend genannten ethylenisch ungesättigten Carbonsäuren. Vorzugsweise entspricht mindestens ein C₁-C₁₀-Alkylester einer ethylenisch ungesättigten Carbonsäure einem Carbonsäureester der allgemeinen Formel II, 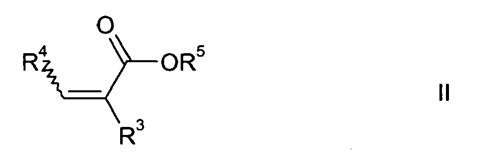 wobei die Variablen wie folgt definiert sind:
R³ und R⁴ sind gleich oder verschieden,
R³ wird gewählt aus Wasserstoff und
unverzweigtem und verzweigtem C₁-C₁₀-Alkyl, wie beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, iso-Octyl, 2-Ethylhexyl, n-Nonyl, n-Decyl, 2-n-Propyl-heptyl; besonders bevorzugt C₁-C₄-Alkyl wie Methyl, Ethyl, n-Propyl, iso-Propyl, n-Butyl, iso-Butyl, sec.-Butyl und tert.-Butyl, insbesondere Methyl oder n-Butyl;
R⁴ wird gewählt aus unverzweigten und verzweigten C₁-C₁₀-Alkyl wie beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, iso-Octyl, 2-Ethylhexyl, n-Nonyl, 2-n-Propyl-heptyl, n-Decyl; besonders bevorzugt C₁-C₄-Alkyl wie Methyl, Ethyl, n-Propyl, iso-Propyl, n-Butyl, iso-Butyl, sec.-Butyl und tert.-Butyl, insbesondere Methyl;
und ganz besonders bevorzugt Wasserstoff.
R⁵ wird gewählt aus
unverzweigten und verzweigten C₁-C₁₀-Alkyl wie beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, iso-Octyl, 2-Ethylhexyl, n-Nonyl, 2-n-Propyl-heptyl, n-Decyl; besonders bevorzugt 2-Ethylhexyl, 2-n-Propyl-heptyl oder C₁-C₄-Alkyl wie Methyl, Ethyl, n-Propyl, iso-Propyl, n-Butyl, iso-Butyl, sec.-Butyl und tert.-Butyl, insbesondere Methyl, Ethyl, 2-Ethylhexyl, 2-n-Propyl-heptyl oder n-Butyl;
C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl.

In einer Ausführungsform der vorliegenden Erfindung bedeutet R³ Wasserstoff oder Methyl. Ganz besonders bevorzugt bedeutet R³ Wasserstoff.

In einer Ausführungsform der vorliegenden Erfindung bedeuten R³ und R⁴ Wasserstoff.

Ganz besonders bevorzugt ist R⁵ Methyl, Ethyl, n-Butyl, 2-n-Propyl-heptyl oder 2-Ethylhexyl.

Wünscht man mehrere C₁-C₁₀-Alkylester von einer oder mehreren ethylenisch ungesättigten Carbonsäure(n) einzusetzen, so kann man beispielsweise zwei verschiedene ethylenisch ungesättigte Carbonsäureester der allgemeinen Formel II einsetzen wie beispielsweise Acrylsäuremethylester und Methacrylsäuremethylester.

In einer Ausführungsform der vorliegenden Erfindung setzt man als C₁-C₁₀-Alkylester einer ethylenisch ungesättigten Carbonsäure (Meth)acrylsäuremethylester, (Meth)acrylsäureethylester, (Meth)acrylsäure-n-butylester, (Meth)acrylsäure-2-ethylhexylester oder (Meth)acrylsäure-2-n-propyl-heptylester ein.

In einer Ausführungsform der vorliegenden Erfindung setzt man nur einen C₁-C₁₀-Alkylester einer ethylenisch ungesättigten Carbonsäure und nur eine ethylenisch ungesättigte Carbonsäure ein, insbesondere Acrylsäure oder Methacrylsäure und (Meth)acrylsäure-n-butylester.

In einer Ausführungsform der vorliegenden Erfindung können zur Herstellung von Ethylencopolymer bis zu 5 Gewichtsteile, bezogen auf die Summe der oben beschriebenen Comonomere (a), (b) und (c), weitere Comonomere (d) einpolymerisiert werden, beispielsweise Vinylacetat und/oder Isobuten.

In einer Ausführungsform der vorliegenden Erfindung werden keine weiteren Comonomere (d) einpolymerisiert.

Zur Auslösung der radikalischen Copolymerisation kann man einen oder mehrere Starter (Radikalstarter) einsetzen. Als Starter sind beispielsweise organische Peroxide, Sauerstoff oder Azoverbindungen geeignet. Auch Mischungen mehrerer Radikalstarter sind geeignet.

Geeignete Peroxide, ausgewählt aus kommerziell erhältlichen Substanzen, sind Didekanoylperoxid, 2,5-Dimethyl-2,5-di(2-ethylhexanoylperoxy)hexan, tert.-Amylperoxy-pivalat, tert.-Amylperoxy-2-ethylhexanoat, Dibenzoylperoxid, tert.-Butylperoxy-2-ethylhexanoat, tert.-Butylperoxydiethylacetat, tert.-Butylperoxydiethylisobutyrat, 1,4-Di(tert.-butylperoxycarbonyl)-cyclohexan als Isomerengemisch, tert.-Butylperisononanoat, 1,1-Di-(tert.-butylperoxy)-3,3,5-trimethylcyclohexan, 1,1-Di-(tert.-butylperoxy)-cyclohexan, Methyl-isobutylketonperoxid, tert.-Butylperoxyisopropylcarbonat, 2,2-Di-(tert.-butylperoxy)butan oder tert.-Butylperoxacetat; tert.-Butylperoxybenzoat, Di-tert.-amylperoxid, Dicumylperoxid, die isomeren Di-(tert.-butylperoxyisopropyl)benzole, 2,5-Dimethyl-2,5-di-tert.-butylperoxyhexan, tert.-Butylcumylperoxid, 2,5-Dimethyl-2,5-di(tert.-butylperoxy)-hex-3-in, Di-tert.-butylperoxid, 1,3-Diisopropylbenzolmonohydroperoxid, Cumolhydroperoxid oder tert.-Butylhydroperoxid, weiterhin dimere oder trimere Ketonperoxide, wie aus EP-A 0 813 550 bekannt.

Als Peroxide sind Di-tert.-butylperoxid, tert.-Amylperoxypivalat, tert.-Butylperoxypivalat, tert.-Butylperoxyisononanoat, tert.-Butylperoxy-2-ethylhexanoat oder 2,2-Di-(tert.-butylperoxy)butan oder Gemische derselben besonders geeignet. Als Azoverbindung sei Azobisisobutyronitril ("AIBN") beispielhaft genannt. Radikalstarter werden in für Polymerisationen üblichen Mengen dosiert.

Zahlreiche kommerziell erhältliche organische Peroxide werden mit sogenannten Phlegmatisierern versetzt, bevor sie verkauft werden, um sie besser handhabbar zu machen. Als Phlegmatisierer sind beispielsweise Weißöl oder Kohlenwasserstoffe wie insbesondere Isododekan geeignet. Unter den Bedingungen der Hochdruckpolymerisation können derartige Phlegmatisierer eine motekulargewichtsregelnde Wirkung haben. Im Sinne der vorliegenden Erfindung soll unter dem Einsatz von Molekulargewichtsreglern der zusätzliche Einsatz weiterer Molekulargewichtsregler über den Einsatz der Phlegmatisierer hinaus verstanden werden.

Erfindungsgemäß hergestelltes Ethylencopolymer weist einen Schmelzflussindex (MFI) im Bereich von 0,2 bis 50 g/10 min, bevorzugt 2 bis 20 g/10 min, besonders bevorzugt 5 bis 15 g/10 min auf, gemessen bei 190°C und einer Belastung von 2160 g nach DIN 53735.

In einer Ausführungsform der vorliegenden Erfindung weist erfindungsgemäß hergestelltes Ethylencopolymer ein Molekulargewicht Mₙ im Bereich bis zu 20.000 g/mol auf, bevorzugt 500 bis 10.000 g/mol und besonders bevorzugt 2.000 bis 9.500 g/mol.

In einer Ausführungsform der vorliegenden Erfindung weist erfindungsgemäß hergestelltes Ethylencopolymer eine Molekulargewichtsverteilung M_{w}/Mₙ im Bereich von 1,7 bis 20 auf, bevorzugt 2 bis 10.

In einer Ausführungsform der vorliegenden Erfindung weist erfindungsgemäß hergestelltes Ethylencopolymer eine Säurezahl im Bereich bis zu 200 mg KOH/g, bevorzugt bis 150 mg KOH/g und besonders bevorzugt von 5 bis 75 mg KOH/g auf.

Erfindungsgemäß dosiert man hinter dem ersten Reaktor einen oder mehrere Initiatoren in die Reaktionsmischung, und verwendet man wenigstens einen Hochdruckautoklaven und einen Rohrreaktor.

Dabei ist "hinter dem ersten Reaktor" auf den Strom der die Apparatur durchströmenden Reaktionsmischung bezogen.

Vorzugsweise dosiert man, in eine Kaskade, die einen Hochdruckautoklaven und einen Rohrreaktor umfasst, mindestens einen Initiator, und zwar direkt in den Rohrreaktor. Dabei kann man beispielsweise am Anfang, in der Mitte oder nach einem Drittel des Rohrreaktors Initiator dosieren. Man kann auch an mehreren Stellen des Rohrreaktors Initiator dosieren.

In einer Ausführungsform der vorliegenden Erfindung führt man der erfindungsgemäße Verfahren so durch, dass man in einer Kaskade aus einem Hochdruckautoklaven, gefolgt von einem Rohrreaktor, copolymerisiert und den Initiator oder die Initiatoren in den Hochdruckautoklaven und zwischen dem Hochdruckautoklaven und dem Rohrreaktor oder unmittelbar in den Rohrreaktor dosiert.

Als Initiatoren sind oben genannte Verbindungen geeignet. Besonders geeignet sind Di-tert.-butylperoxid, tert.-Amylperoxypivalat, tert.-Butylperoxypivalat, tert.-Butylperoxyisononanoat, tert.-Butylperoxy-2-ethylhexanoat oder 2,2-Di-(tert.-butylperoxy)butan oder Gemische derselben.

In einer Ausführungsform der vorliegenden Erfindung dosiert man den oder die Initiatoren, den man erfindungsgemäß hinter dem ersten Reaktor dosiert, in Form einer Lösung in einem oder mehreren bei Zimmertemperatur flüssigen Keton(en) oder einem oder mehreren Kohlenwasserstoffen.

Vorzugsweise dosiert man den oder die Initiatoren als 0,1- bis 50- Gew.-% Lösung, bevorzugt 1 bis 20 Gew.-%, in einem oder mehreren Kohlenwasserstoffen oder einem oder mehreren bei Zimmertemperatur flüssigen Keton(en) oder Gemischen aus Kohlenwasserstoffen und Ketonen.

Als bei Zimmertemperatur flüssige Ketone sind beispielsweise Aceton, Methylisobutylketon (MIBK) und insbesondere Ethylmethylketon zu nennen. Als Kohlenwasserstoffe seien aromatische Kohlenwasserstoffe wie beispielsweise Toluol, Ethylbenzol, ortho-Xylol, meta-Xylol und para-Xylol zu nennen, weiterhin cycloaliphatische Kohlenwasserstoffe wie beispielsweise Cyclohexan, und aliphatische C₆-C₁₆-Kohlenwasserstoffe, verzweigt oder unverzweigt, beispielsweise n-Heptan, n-Octan, Isooktan, n-Dekan, n-Dodekan und insbesondere Isododekan (2,2,4,6,6-Pentamethylheptan).

In einer Ausführungsform der vorliegenden Erfindung dosiert man im Bereich von 0,1 bis 1000 ppm, bevorzugt im Bereich von 1 und 200 ppm Initiator, bezogen auf den Ausstoß an Ethylencopolymer. Dabei sind unter ppm jeweils Masse-ppm zu verstehen.

In einer Ausführungsform der vorliegenden Erfindung dosiert man so viel Initiator hinter dem ersten Reaktor in die Reaktionsmischung, dass man im ersten Reaktor etwa 51 bis 99 % des Umsatzes erzielt, bezogen auf den gesamten Umsatz, und im zweiten und gegebenenfalls den weiteren Reaktoren insgesamt 1 bis 49 %.

In einer Ausführungsform der vorliegenden Erfindung ist die Reaktionstemperatur in demjenigen Reaktor, in dem erfindungsgemäß Initiator dosiert wird, um 5 bis 100°C höher als im ersten Reaktor, bevorzugt um 5 bis 50°C und besonders bevorzugt um 10 bis 40°C höher.

Ein weiterer Gegenstand der vorliegenden Erfindung sind Ethylencopolymere, erhältlich durch das erfindungsgemäße Verfahren. Erfindungsgemäße Ethylencopolymere weisen dann, wenn mindestens ein Comonomer gewählt wird aus ethylenisch ungesättigten Mono- oder Dicarbonsäuren oder deren Derivaten, einen erhöhten Anteil an polaren Molekülen und eine besonders uneinheitliche Comonomerverteilung auf. So kann beispielsweise ein erfindungsgemäß hergestelltes Ethylencopolymer mit insgesamt 40 Gew.-% Comonomer (b) und (c) aus einer Mischung von Molekülen bestehen, von denen einige bis zu 90 Gew.-% Comonomer (b) und (c) und einige weniger als 1 Gew.-% Comonomer (b) und (c) enthalten.

Erfindungsgemäße Ethylencopolymere weisen eine Temperatur des Kristallisationsbeginns, T_{KB}, im Bereich von 55 bis 75°C, bevorzugt mindestens 60°C auf. Dabei wird T_{KB} beispielsweise durch Differentialthermoanalyse (DSC) bestimmt.

Erfindungsgemäße Ethylencopolymere weisen eine besonders gute Lagerfähigkeit auf und neigen nicht zum Verkleben oder Verbacken. Erfindungsgemäße Ethylencopolymere sind weiterhin besonders gut als Schlagzähmodifikatoren geeignet. Mit erfindungsgemäßem Ethylencopolymer ausgerüstete Thermoplasten sind ebenfalls sehr gut lagerfähig und neigen auch bei sommerlichen Temperaturen nicht zum Verkleben oder Verbacken.

Ein spezieller Gegenstand der vorliegenden Erfindung sind Ethylencopolymere mit einem MFI im Bereich von 0,2 bis 50 g, gemessen nach DIN 53753, einer Temperatur von 190°C und einer Belastung von 2,16 kg, die als Comonomere einpolymerisiert enthalten
(a) 50 bis 80 Gew.-%, bevorzugt bis 75 Gew.-% Ethylen,
(b1) 2 bis 10 Gew.-% (Meth)acrylsäure,
(b2) 0,1 bis 2 Gew.-% Maleinsäure oder Maleinsäureanhydrid,
(c) 15 bis 40 Gew.-% n-Butyl(meth)acrylat,
hergestellt nach dem erfindungsgemäßen Verfahren. Erfindungsgemäße Ethylencopolymere weisen eine T_{KB} im Bereich von 55 bis 75°C, bevorzugt 60 bis 70°C auf.

Die Erfindung wird durch Arbeitsbeispiele erläutert.
I. Erfindungsgemäße Herstellung von Ethylencopolymeren
I.1 Erfindungsgemäße Herstellung von Ethylencopolymer A.1 bis A.3 und Vergleichscopolymeren V-A.4 und V-A.5

Bei Ethylencopolymer A.1 bis A.3 und Vergleichscopolymer V-A.4 und V-A.5 handelt es sich jeweils um Copolymere aus 61,5 Gew.-% Ethylen, 33 Gew.-% n-Butylacrylat, 5 Gew.-% Acrylsäure und 0,5 Gew.-% Maleinsäureanhydrid (jeweils einpolymerisierte Anteile) mit Schmelzflussindex MFI (190°C, 2,16 kg) 10 dg/min, hergestellt in einer Kaskade aus Hochdruckautoklav mit nachgeschaltetem Rohrreaktor.

Die Copolymerisation erfolgte kontinuierlich in einer Kaskade, bestehend aus gerührtem Hochdruckautoklav mit 35 I Volumen und Rohrreaktor von ca. 200 m Länge und einem Innendurchmesser von 15 mm; der Ethylendurchsatz betrug 1,4 t/h. Im gerührten Hochdruckautoklav wurde mit ca. 2,5 l/h einer Peroxid-Lösung (tert.-Amylperoxypivalat in Isododekan, Konzentration: 10 Gew.-%) initiiert. Der Druck betrug 2150 bar, die maximale Temperatur im Hochdruckautoklaven und im Rohrreaktor ist in Tabelle 1 aufgeführt. Als Molekulargewichtsregler wurden 0,25 l/h Propionaldehyd (PA) auf der Saugseite des Nachverdichters zudosiert. Am Druckhalteventil wurde auf ca. 400 bar entspannt, dabei erhöhte sich die Temperatur. Die Kühlung des Rohrreaktors erfolgte mittels 200 °C heißem Druckwasser. Am Übergang zwischen Autoklav und Rohrreaktor wurde in Beispielen A1 bis A3 Initiator (tert.-Amylperoxypivalat, tert.-Butylperoxy-2-e-thylhexanoat, Mischung 1:2, bezogen auf Gewichtsteile) in Isododekan, Gesamtkonzentration von Peroxiden: 8 Gew.-%) gemäß Tabelle 1 dosiert. Im Vergleichsbeispiel V-A.4 und V-A.5 wurde in den Rohrreaktor kein Initiator dosiert.

**Tabelle 1: Versuchsdaten zu den erfindungsgemäß hergestellten Ethylencopolymeren A.1 bis A.3 sowie zu den Vergleichscopolymeren V-A.4 und V-A.5**

| ECP | Ausstoß [t/h] | T^{max}, Hochdruck-autoklav [°C] | T^{max}, Rohr-reaktor [°C] | PO-Dosierung in den Rohrreaktor, [kg/h] |
|---|---|---|---|---|
| A.1 | 0,21 | 199 | 222 | 0,68 |
| A.2 | 0,21 | 193 | 229 | 1,55 |
| A.3 | 0,23 | 190 | 229 | 1,44 |
| V-A.4 | 0,18 | 198 | 212 | 0 |
| V-A.5 | 0,19 | 196 | 215 | 0 |

| | | | | |
|---|---|---|---|---|
| ECP: Ethylencopolymer PO-Dosierung: in den Rohrreaktor dosierte Menge tert.-Amylperoxypivalat, tert.-Butylperoxy-2-ethylhexanoat-Mischung (1:2, bezogen auf Gewichtsteile) in Isododekan, Gesamtkonzentration von Peroxiden: 8 Gew.-%) | | | | |

### II. Prüfung der Verbackungstendenz

Für die Prüfung der Verbackung wurden 800 ml (=ca. 430 g) Ethylencopolymer in einen Messzylinder gefüllt und mit einem Metallgewicht (2,6 kg) beschwert. Anschließend wurde 7 Tage bei 40°C inkubiert. Nach Abkühlen auf Raumtemperatur wurde der Messzylinder um 180°C gedreht und die Rieselfähigkeit beurteilt.

### Bewertungsskala:

++ = sehr geringe Verbackung, nach wenigen Sekunden setzt Rieseln ein, keine bzw. nur kleine Agglomerate
+ = leichte Verbackung, nach Schlag auf den Messzylinderboden setzt Rieseln ein, mittlere Agglomerate
o = Verbackung, nach Schlägen auf den Messzylinderboden und -seite setzt Rieseln ein, mittlere und große Agglomerate

**Tabelle 2: Anwendungstechnische Eigenschaften der erfindungsgemäß hergestellten Ethylencopolymere A.1 bis A.3 sowie der Vergleichscopolymere V-A.4 und V-A.5**

| | T_{g} [°C] | Tₘ [°C] | T_{KB} [°C] | Verbackungstendenz |
|---|---|---|---|---|
| A.1 | -40 | 27,3 und 69,0 | 63 | + |
| A.2 | -42 | 28,4 und 72,3 | 65 | ++ |
| A.3 | -42 | 25,7 und 74,5 | 65 | + |
| V-A.4 | -40 | 18,4 | 50 | 0 |
| V-A.5 | -42 | 18,3 und 61,7 | 53 | 0 |

| | | | | |
|---|---|---|---|---|
| Tg: Glastemperatur, gemessen nach DIN 53765 Tₘ: Erweichungstemperatur, gemessen nach DIN 53765 im zweiten Cyclus T_{KB}: Temperatur des Kristallisationsbeginns, gemessen nach DIN 53765 | | | | |

## Patentansprüche

1. Verfahren zur kontinuierlichen Herstellung von Ethylencopolymeren mit einem MFI im Bereich von 0,2 bis 50 g/10 min, gemessen nach DIN 53753, einer Temperatur von 190°C und einer Belastung von 2,16 kg, durch radikalische Copolymerisationvon Ethylen und mindestens einem Comonomer in einer Kaskade aus mindestens zwei Reaktoren, die einen Hochdruckautoklaven und einen Rohrreaktor umfasst, **dadurch gekennzeichnet, dass** man hinter dem ersten Reaktor einen oder mehrere Initiatoren in die Reaktionsmischung dosiert.

2. Verfahren nach Anspruch 1, **dadurch gekennzeichnet, dass** man den oder die Initiatoren als 0,5- bis 50-Gew.-% Lösung in einem oder mehreren Kohlenwasserstoffen oder einem oder mehreren bei Zimmertemperatur flüssigen Keton(en) dosiert.

3. Verfahren nach Anspruch 1 oder 2, **dadurch gekennzeichnet, dass** es sich bei mindestens einem Initiator um ein organisches Peroxid handelt.

4. Verfahren nach einem der Ansprüche 1 bis 3, **dadurch gekennzeichnet, dass** man es in einer Kaskade durchführt, gewählt aus mindestens zwei Hochdruckautoklaven, aus mindestens zwei Rohrreaktoren und Kaskaden aus Hochdruckautoklav und Rohrreaktor.

5. Verfahren nach einem der Ansprüche 1 bis 4, **dadurch gekennzeichnet, dass** man das oder die Comonomere ausgewählt aus ethylenisch ungesättigten Carbonsäuren, ethylenisch ungesättigten Dicarbonsäuren und deren Anhydriden, Estern von ethylenisch ungesättigten Carbonsäuren und Carbonsäurevinylestern.

6. Verfahren nach einem der Ansprüche 1 bis 4, **dadurch gekennzeichnet, dass** man miteinander copolymerisiert:
(a) 50 bis 95 Gew.-% Ethylen,
(b) 0,1 bis 30 Gew.-% mindestens ein Comonomer, ausgewählt aus ethylenisch ungesättigten Carbonsäuren und ethylenisch ungesättigten Dicarbonsäuren oder
(c) 0,5 bis 50 Gew.-% mindestens ein Comonomer, ausgewählt aus Estern von ethylenisch ungesättigten Carbonsäuren,
(d) gegebenenfalls ein oder mehrere weitere Comonomere,
wobei Angaben in Gew.-% jeweils auf das hergestellte Ethylencopolymer bezogen sind.

7. Verfahren nach einem der Ansprüche 1 bis 5, **dadurch gekennzeichnet, dass** man bei Temperaturen im Bereich von 120 und 350°C copolymerisiert.

8. Verfahren nach einem der Ansprüche 1 bis 6, **dadurch gekennzeichnet, dass** man bei Drücken im Bereich von 500 bis 5000 bar copolymerisiert.

9. Verfahren nach einem der Ansprüche 1 bis 7, **dadurch gekennzeichnet, dass** es sich bei den hergestellten Ethylencopolymeren um solche mit einem Molekulargewicht Mₙ bis zu 20.000 g/mol handelt.

10. Verfahren nach einem der Ansprüche 1 bis 8, **dadurch gekenntzeichnet, dass** man in einer Kaskade aus einem Hochdruckautoklaven, gefolgt von einem Rohrreaktor, copolymerisiert und den Initiator oder die Initiatoren in den Hochdruckautoklaven und zwischen dem Hochdruckautoklaven und dem Rohrreaktor oder unmittelbar in den Rohrreaktor dosiert.

11. Ethylencopolymere mit einem MFI im Bereich von 0,2 bis 50 g/10 min gemessen nach DIN 53753, einer Temperatur von 190°C und einer Belastung von 2,16 kg, mit mindestens einem Comonomer, ausgewählt aus ethylenisch ungesättigten Carbonsäuren und Estern von ethylenisch ungesättigten Carbonsäuren, hergestellt nach einem Verfahren nach einem der Ansprüche 1 bis 9.

12. Ethylencopolymere mit einem MFI im Bereich von 0,2 bis 50 g/10 min, gemessen nach DIN 53753, einer Temperatur von 190°C und einer Belastung von 2,16 kg, die als Comonomere einpolymerisiert enthalten
(a) 50 bis 80 Gew.-% Ethylen,
(b1) 2 bis 10 Gew.-% (Meth)acrylsäure,
(b2) 0,1 bis 2 Gew.% Maleinsäure oder Maleinsäureanhydrid,
(c) 15 bis 40 Gew.-% n-Butyl(meth)acrylat,
hergestellt nach einem Verfahren nach einem der Ansprüche 1 bis 9.

13. Verwendung von Ethylencopolymeren nach Anspruch 11 oder 12 als Haftvermittler, Schlagzähmodifikator oder Additiv in Wood-Plastic-Composites oder bei der Oberflächenbeschichtung.

## Claims

1. A process for the continuous preparation of ethylene copolymers which have an MFI in the range from 0.2 to 50 g/10 min, measured in accordance with DIN 53753, at a temperature of 190°C under a load of 2.16 kg, by free-radical copolymerization of ethylene and at least one comonomer in a cascade comprising at least two reactors including a high-pressure autoclave and a tube reactor, wherein one or more initiators are fed into the reaction mixture downstream of the first reactor.

2. The process according to claim 1, wherein the initiator or initiators is fed in as a 0.5 - 50% strength by weight solution in one or more hydrocarbons or one or more ketone(s) which is/are liquid at room temperature.

3. The process according to claim 1 or 2, wherein at least one initiator is an organic peroxide.

4. The process according to any of claims 1 to 3 which is carried out in a cascade selected from among cascades comprising at least two high-pressure autoclaves, cascades comprising at least two tube reactors and cascades comprising a high-pressure autoclave and a tube reactor.

5. The process according to any of claims 1 to 4, wherein the comonomer or comonomers is/are selected from among ethylenically unsaturated carboxylic acids, ethylenically unsaturated dicarboxylic acids and their anhydrides, esters of ethylenically unsaturated carboxylic acids and vinyl carboxylates.

6. The process according to any of claims 1 to 4, wherein the following are copolymerized with one another:
(a) from 50 to 95% by weight of ethylene,
(b) from 0.1 to 30% by weight of at least one comonomer selected from among ethylenically unsaturated carboxylic acids and ethylenically unsaturated dicarboxylic acids or
(c) from 0.5 to 50% by weight of at least one comonomer selected from among esters of ethylenically unsaturated carboxylic acids,
(d) if appropriate, one or more further comonomers,
where the percentages by weight are in each case based on the ethylene copolymer prepared.

7. The process according to any of claims 1 to 5, wherein the copolymerization is carried out at temperatures in the range from 120 to 350°C.

8. The process according to any of claims 1 to 6, wherein the copolymerization is carried out at pressures in the range from 500 to 5000 bar.

9. The process according to any of claims 1 to 7, wherein the ethylene copolymers prepared have a molecular weight Mₙ of up to 20 000 g/mol.

10. The process according to any of claims 1 to 8, wherein the copolymerization is carried out in a cascade comprising a high-pressure autoclave followed by a tube reactor and the initiator or initiators is/are introduced into the high-pressure autoclave and between the high-pressure autoclave and the tube reactor or directly into the tube reactor.

11. An ethylene copolymer which has an MFI in the range from 0.2 to 50 g/10 min, measured in accordance with DIN 53753, at a temperature of 190°C under a load of 2.16 kg and comprises at least one comonomer selected from among ethylenically unsaturated carboxylic acids and esters of ethylenically unsaturated carboxylic acids and has been prepared by a process according to any of claims 1 to 9.

12. An ethylene copolymer which has an MFI in the range from 0.2 to 50 g/10 min, measured in accordance with DIN 53753, at a temperature of 190°C under a load of 2.16 kg and comprises, as copolymerized comonomers,
(a) from 50 to 80% by weight of ethylene,
(b1) from 2 to 10% by weight of (meth)acrylic acid,
(b2) from 0.1 to 2% by weight of maleic acid or maleic anhydride,
(c) from 15 to 40% by weight of n-butyl (meth)acrylate,
and has been prepared by a process according to any of claims 1 to 9.

13. The use of ethylene copolymers according to claim 11 or 12 as bonding agent, impact modifier or additive in wood-plastic composites or in the coating of surfaces.

## Revendications

1. Procédé pour la préparation en continu de copolymères d'éthylène présentant un indice de fusion (MFI) dans la plage de 0,2 à 50 g/10 min, mesuré selon la norme DIN 53753, à une température de 190°C et une charge de 2,16 kg, par copolymérisation radicalaire d'éthylène et d'au moins un comonomère dans une cascade d'au moins deux réacteurs, qui comprend un autoclave à haute pression et un réacteur tubulaire, **caractérisé en ce qu'**on dose, en aval du premier réacteur, un ou plusieurs initiateurs dans le mélange réactionnel.

2. Procédé selon la revendication 1, **caractérisé en ce qu'**on dose le ou les initiateurs sous forme d'une solution à 0,5 à 50% en poids dans un ou plusieurs hydrocarbures ou une ou plusieurs cétones liquides à température ambiante.

3. Procédé selon la revendication 1 ou 2, **caractérisé en ce qu'**il s'agit, pour au moins un initiateur, d'un peroxyde organique.

4. Procédé selon l'une quelconque des revendications 1 à 3, **caractérisé en ce qu'**on le réalise dans une cascade choisie parmi au moins deux autoclaves haute pression, au moins deux réacteurs tubulaires et les cascades d'autoclave haute pression et de réacteur tubulaire.

5. Procédé selon l'une quelconque des revendications 1 à 4, **caractérisé en ce qu'**on choisit le ou les comonomères parmi les acides carboxyliques éthyléniquement insaturés, les acides dicarboxyliques éthyléniquement insaturés et leurs anhydrides, les esters d'acides carboxyliques éthyléniquement insaturés et les esters vinyliques d'acides carboxyliques.

6. Procédé selon l'une quelconque des revendications 1 à 4, **caractérisé en ce qu'**on copolymérise les uns avec les autres :
(a) 50 à 95% en poids d'éthylène,
(b) 0,1 à 30% en poids d'au moins un comonomère, choisi parmi les acides carboxyliques éthyléniquement insaturés et les acides dicarboxyliques éthyléniquement insaturés ou
(c) 0,5 à 50% en poids d'au moins un comonomère, choisi parmi les esters d'acides carboxyliques éthyléniquement insaturés,
(d) le cas échéant un ou plusieurs autres comonomères, où les indications en % en poids se rapportent à chaque fois au copolymère d'éthylène préparé.

7. Procédé selon l'une quelconque des revendications 1 à 5, **caractérisé en ce qu'**on copolymérise à des températures dans la plage de 120 à 350°C.

8. Procédé selon l'une quelconque des revendications 1 à 6, **caractérisé en ce qu'**on copolymérise à des pressions dans la plage de 500 à 5000 bars.

9. Procédé selon l'une quelconque des revendications 1 à 7, **caractérisé en ce qu'**il s'agit, pour les copolymères d'éthylène préparés, de ceux présentant un poids moléculaire Mₙ allant jusqu'à 20 000 g/mole.

10. Procédé selon l'une quelconque des revendications 1 à 8, **caractérisé en ce qu'**on copolymérise dans une cascade d'un autoclave haute pression, suivi d'un réacteur tubulaire, puis on dose l'initiateur ou les initiateurs dans l'autoclave haute pression et entre l'autoclave haute pression et le réacteur tubulaire ou directement dans le réacteur tubulaire.

11. Copolymères d'éthylène présentant un indice de fusion (MFI) dans la plage de 0,2 à 50 g/10 min, mesuré selon la norme DIN 53753, à une température de 190°C et une charge de 2,16 kg, avec au moins un comonomère, choisi parmi les acides carboxyliques éthyléniquement insaturés et les esters d'acides carboxyliques éthyléniquement insaturés, préparés selon un procédé selon l'une quelconque des revendications 1 à 9.

12. Copolymères d'éthylène présentant un indice de fusion (MFI) dans la plage de 0,2 à 50 g/10 min, mesuré selon la norme DIN 53753, à une température de 190°C et une charge de 2,16 kg, qui contiennent, comme comonomères, sous forme copolymérisée
(a) 50 à 80% en poids d'éthylène,
(b1) 2 à 10% en poids d'acide (méth)acrylique,
(b2) 0,1 à 2% en poids d'acide maléique ou d'anhydride de l'acide maléique,
(c) 15 à 40% en poids de (méth)acrylate de n-butyle, préparés selon un procédé selon l'une quelconque des revendications 1 à 9.

13. Utilisation de copolymères d'éthylène selon la revendication 11 ou 12 comme promoteur d'adhérence, agent de modification de la résilience, ou additif dans les composites bois-plastique ou lors du revêtement de surfaces.
